## Europäisches Patentamt
## European Patent Office
## Office européen des brevets

(19)

(11) Veröffentlichungsnummer: **0 173 023**
**B1**

(12) **EUROPÄISCHE PATENTSCHRIFT**

(45) Veröffentlichungstag der Patentschrift:
**26.08.87**

(51) Int. Cl.⁴: **F 16 D  1/06**, F 16 D  3/80

(21) Anmeldenummer: **85108006.9**

(22) Anmeldetag: **28.06.85**

(54) **Einmalkupplung.**

(30) Priorität: **28.08.84  DE 3431504**

(43) Veröffentlichungstag der Anmeldung:
**05.03.86 Patentblatt 86/10**

(45) Bekanntmachung des Hinweises auf die Patenterteilung:
**26.08.87 Patentblatt 87/35**

(84) Benannte Vertragsstaaten:
**FR GB**

(56) Entgegenhaltungen:
**DE - A - 3 000 637**
**DE - C - 646 573**
**US - A - 3 790 292**

(73) Patentinhaber: **DORNIER GMBH, Postfach 1420, D-7990 Friedrichshafen 1 (DE)**

(72) Erfinder: **Böhne, Hermann, Neufracherstrasse 15, D-7777 Salem 1 (DE)**

(74) Vertreter: **Landsmann, Ralf, Dipl.-Ing., Kleeweg 3, D-7990 Friedrichshafen 1 (DE)**

ACTORUM AG

**Beschreibung**

Die Erfindung betrifft eine Einmalkupplung zur Übertragung eines Drehmoments einer schnelldrehenden Welle auf eine Nabe oder eine zweite Welle.

Als Einmalkupplung wird eine Kupplung bezeichnet, mit der lediglich ein Einkuppelvorgang und kein Auskuppelvorgang durchgeführt wird. Eine solche Kupplung wird beispielsweise bei Flugkörpern eingesetzt, die mit laufendem Motor und stehendem Propeller abgeschossen werden und deren Motordrehmoment erst während des Fluges auf den Propeller gekuppelt wird. Das Drehmoment soll dann für die gesamte Flugdauer sicher übertragen werden.

Aufgabe der Erfindung ist es, eine Einmalkupplung zu schaffen, die leicht ist, lange lagerfähig ist, unter schlechten Umweltbedingungen funktionsfähig ist und die im ausgekuppelten Zustand hohe Drehzahldifferenzen aushält. Die Kupplung soll in kurzer Zeit einkuppeln, ein hohes Drehmoment übertragen und längere Zeit ohne Schlupf arbeiten.

Diese Aufgabe wird erfindungsgemäss gelöst von einer Kupplung mit den in Anspruch 1 angegebenen Merkmalen.

Ausbildungen der Erfindung sind Gegenstände von Unteransprüchen.

Die Erfindung benutzt den ansonsten unerwünschten Effekt, dass Späne, die in einen schmalen Spalt zwischen ein drehendes und ein stehendes Teil aus Metall geraten, zum «Fressen» beider Teile führen.

Erfindungsgemäss werden zum Einkuppelzeitpunkt Reibmittel, z.B. Metallspäne, in der Antriebswelle freigesetzt, die durch Bohrungen in den Spalt geraten und dort zum «Fressen», d. h. zu einem reibungsbedingten Formschluss bis hin zu einer Kaltverschweissung oder einer Reibverschweissung mit der Abtriebswelle oder der Abtriebsnabe (Propellernabe) führen. Dieser Formschluss ist im Detail nicht reproduzierbar, im Mittel jedoch so gross, dass keine Relativbewegungen zwischen Propeller und Kurbelwelle stattfinden. Der Schlupf ist selbst bei Dauerläufen absolut vernachlässigbar.

Das Reibmittel verteilt sich besonders gleichmässig im Spalt, wenn die Durchlässe in der Hohlwelle als axial und in Umfangsrichtung versetzt eingebrachte Bohrungen ausgebildet sind.

Wegen der einfachen Herstellung können runde Bohrungen verwendet werden, möglich sind aber auch ovale und rechteckige Durchlässe oder schraubenlinienförmige Durchlässe, die z.B. durch Einsägen herstellbar sind, in der Hohlwelle.

Die Durchlässe können in radialer Richtung durch die Hohlwelle führen und gerade sein oder sich nach aussen konisch erweitern, um die Klemmwirkung an den Keilflächen zu erhöhen. Keilflächen sind auch mit Durchlässen erreichbar, die nicht in radialer Richtung eingebracht sind, sondern in Umfangsrichtung etwas gegen die radiale Richtung verkippt sind.

Als Vorrichtung zur Freisetzung des Reibmittels sind gefüllte Glasampullen in der Hohlwelle vorteilhaft, die über einen kleinen Zündsatz (Auslösesquib) zerstört werden und dann das Reibmittel freigeben. Möglich sind auch Behälter aus einem anderen Material, wie z.B. metallische Röhrchen in der Hohlwelle, die mit einem Deckel verschlossen sind oder deren Durchbrüche von einer Hülse verschlossen sind. Zum Einkuppeln wird das Röhrchen geöffnet oder die Hülse abgezogen. Dies kann mechanisch durch Abziehen oder durch eine Sprengung erfolgen. Möglich ist auch die Verwendung von keramischen Körpern, z.B. in Röhrchenform, die aus zusammengebackenen Reibmitteln (Siliziumcarbid, Aluminiumoxid) bestehen und die zum Einkuppeln z.B. durch eine Sprengung zerstört werden und dabei in viele kleine Teile zerfallen. Die Körper sollen möglichst spröde sein und in feine Körner zerfallen. Dies ist zum Beispiel durch eine Vorspannung, wie bei feinbröselndem Sicherheitsglas, erreichbar.

Als Reibmittel können Sand, Keramik oder Metallpulver, Metallspäne oder Stahlkörner allein oder in Mischung verwendet werden. Bewährt haben sich Vanadiumspäne oder handelsübliche Industriestahlkörner.

Als Material für die Hohlwelle und für die Nabe hat sich Stahl bewährt, der an den einander zugewandten Mantelflächen, die den Spalt bilden, durch Sandstrahlen angerauht wurde. Es können auch andere gebräuchliche Werkstoffe, wie Aluminium, Kupfer, Messing oder Legierungen verwendet werden.

Die Spaltbreite und die Korngrösse des Reibmittels müssen aufeinander abgestimmt sein. Die Körner sollen so klein sein, dass sie in den Spalt eindringen und sich verteilen können und so gross sein, dass sie einen Reibschluss verursachen. Es können regelmässig geformte Körper (Kugeln) oder unregelmässig geformte Teile (Späne) benutzt werden.

Die erfindungsgemässe Kupplung ist relativ leicht, sie eignet sich also für Luftfahrtanwendungen.

Sie ist in der Herstellung günstig, da keine eng tolerierten Teile notwendig sind. Wegen der grossen Angriffsflächen können sehr hohe Kräfte schlupffrei übertragen werden. Die Kupplung weist eine lange Lagerfähigkeit auf, da keine möglicherweise ermüdenden Bauteile wie Federn verwendet werden.

Die Erfindung wird anhand von vier Figuren näher erläutert.

Es zeigen:

Figur 1 eine erfindungsgemässe Kupplung,

Figuren 2 und 3 verschiedene Ausführungsformen von Hohlwellen,

Figur 4 eine Vorrichtung zur Freisetzung von Reibmitteln.

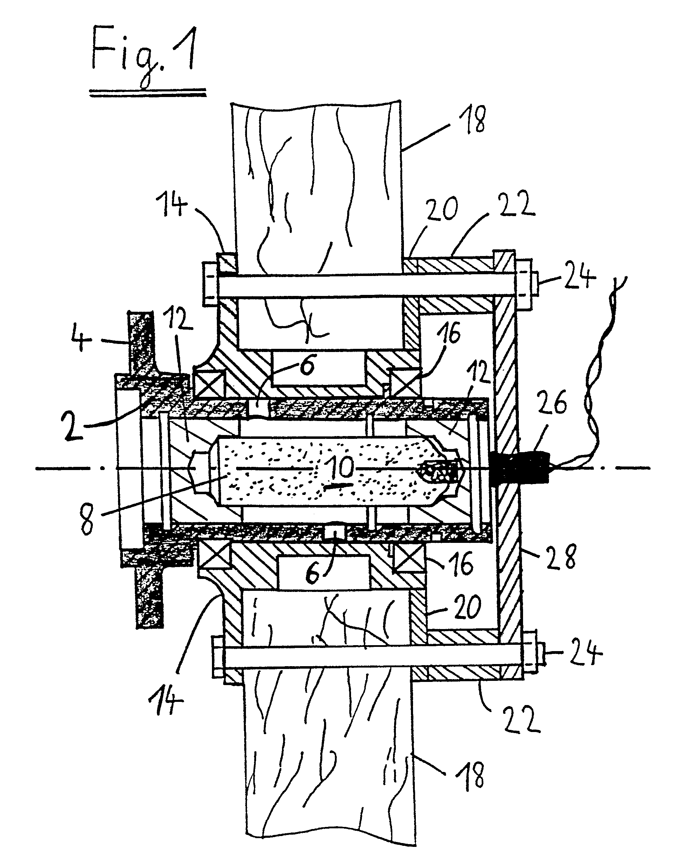

Figur 1 zeigt eine Ausführungsform einer erfindungsgemässen Propeller-Einmalkupplung im Schnitt. Die Antriebswelle ist als Hohlwelle 2 ausgebildet. Sie besitzt am motorseitigen Ende eine Flanch 4 und in ihrem zylindrischen Mittelstück sechs Bohrungen 6. In der Hohlwelle 2 befindet sich eine Glasampulle 8, die mit Reibmittel 10 gefüllt ist und von zwei Zentrierstücken 12 gehalten wird.

Die Propellernabe 14 ist in zwei Lagern 16 auf der Hohlwelle 2 drehbar befestigt. An der Propellernabe 14 sind ein Holzpropeller 18 – über Mitnehmerscheibe 20, Abstandsbuchsen 22 und Schraubenbolzen 24 – und ein Auslösesquib 26 – über einen Squibhalter 28 – vor der Glasampulle 8 befestigt.

Nicht gezeigt ist eine Ausführung, bei der die Vorrichtung zum Freisetzen des Reibmittels (Glasampulle) an dem stehenden Bauteil (Propellernabe 14) befestigt ist und sich im ausgekuppelten Zustand nicht mitdreht. Die Gefahr von Fehlauslösungen wird dadurch verringert.

Figur 1 zeigt die Kupplung im ausgekuppelten Zustand. Die Hohlwelle 2 dreht sich, vom Motor über Flansch 4 angetrieben, gegenüber der Propellernabe 14. Zum Einkuppeln wird der Auslösesquib 26 elektrisch gezündet. Die Druckwelle der Explosion zerstört die Glasampulle 8. Reibmittel 10 wird freigesetzt und gelangt durch die Bohrungen 6 in den Spalt zwischen Hohlwelle 2 und Propellernabe 14. Dort führt es zu einem Reibschluss zwischen den Bauteilen 2 und 14. Propeller 18 wird in Drehung versetzt.

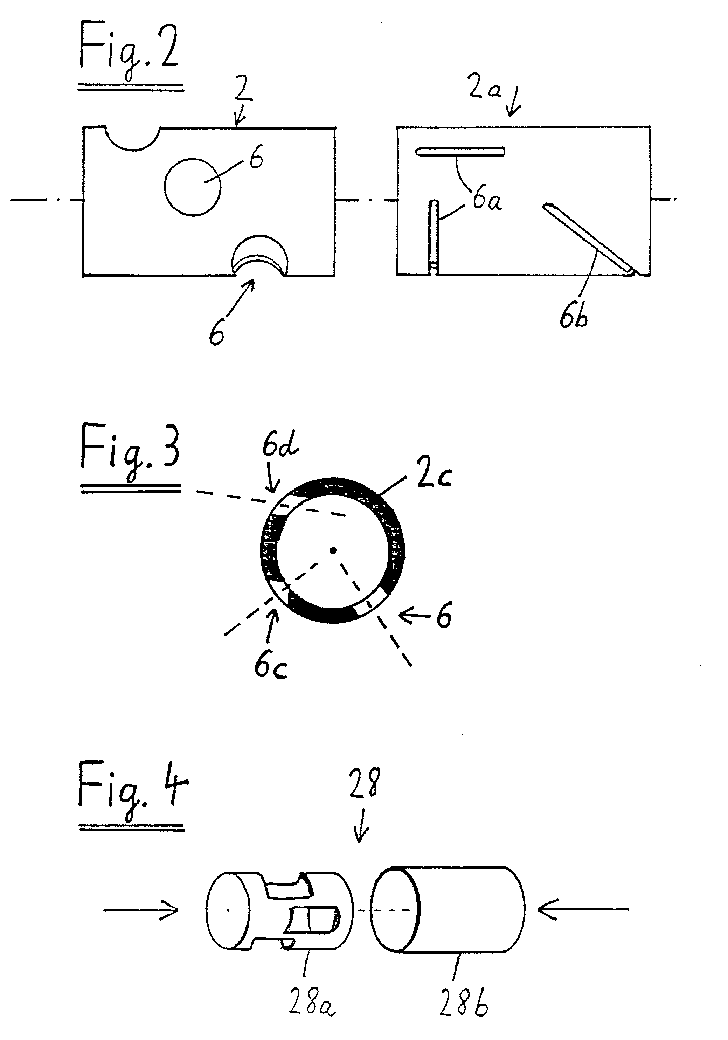

Figur 2 zeigt im Draufblick zwei Ausführungsformen von erfindungsgemässen Hohlwellen 2, 2a, die sich in der Anordnung der Durchbrüche unterscheiden. Hohlwelle 2 weist runde Bohrungen 6 auf, die axial und in Umfangsrichtung versetzt sind. Hohlwelle 2a weist rechteckige Durchbrüche 6a auf, die axial oder in Umfangsrichtung verlaufen. Gezeigt ist zusätzlich ein schraubenlinienförmiger Durchbruch 6b.

Figur 3 zeigt die erfindungsgemässe Hohlwelle 2c im Schnitt. An ihr sind drei verschiedene Möglichkeiten von Durchbruchquerschnitten gezeigt. Durchbruch 6 ist eine gerade Bohrung in radialer Richtung, Durchbruch 6c eine konische Bohrung, Durchbruch 6d ist eine Bohrung, die etwas gegen die radiale Richtung geneigt ist. Die Durchbrüche 6c und 6d weisen Keilflächen auf.

Figur 4 zeigt eine Vorrichtung 28 zum Freisetzen von Reibmittel, die anstelle der in Figur 1 gezeigten Glasampulle mit Sprengladung verwendet werden kann. Die Vorrichtung 28 besteht aus einem mit Durchbrüchen versehenen Röhrchen 28a, in das das Reibmittel gefüllt ist, und aus der Hülse 28b, die, wenn sie darübergeschoben ist, die Durchbrüche verschlossen hält. Zum Einkuppeln wird die Hülse 28b abgezogen.

Ausführungsbeispiel:

Eine Einmalkupplung, wie sie in Figur 1 gezeigt ist, wiegt ca. 700 g. Sie enthält eine handelsübliche Injektionslösungsampulle von 5 ml Inhalt. Die Ampulle ist zu ¾ mit Vanadiumspänen (0,27 Körnung), entsprechend 11 g Vanadium, – in anderen Ausführungsformen mit ca. 18 g Industriestahlkorn (Stahlkorn Robe, Eisenwerk Würth, Bad Friedrichshall) der Körnung 0,25 bis 0,5 – gefüllt. Die Reibflächen sind durch Sandstrahlen gerauht. Die Kupplung hält Leerlaufdrehzahlen von 10 000 Umdrehungen pro Minute aus. Der Einkuppelvorgang erfolgt innerhalb der ersten Millisekunden nach dem Zünden des Squibs. Der Einkuppelvorgang der Kupplung ist sehr gut reproduzierbar. Die Kupplung greift wie alle selbsthemmenden Kupplungen relativ hart ein, bereitet dem Testmotor (Verbrennungsmotor) jedoch keine Schwierigkeiten. Die Einkuppelzeit beträgt ca. 15 msec. Die Kupplung überträgt im 3 Stunden-Dauertest 300 Nm mit vernachlässigbar geringem Schlupf.

**Patentansprüche**

1. Einmalkupplung zur Übertragung eines Drehmoments einer schnelldrehenden Welle (2) auf eine Nabe (14) oder eine zweite Welle, dadurch gekennzeichnet, dass die Welle als Hohlwelle (2) mit mehreren Durchlässen (6) in ihrem Mantel ausgebildet ist, dass eine Vorrichtung (8, 26, 28) vorgesehen ist, die in der Hohlwelle (2) Reibmittel (10) freisetzen kann, das in den zwischen Nabe (14) oder zweiter Welle und Hohlwelle (2) vorgesehenen schmalen Spalt eindringt.

2. Kupplung nach Anspruch 1, dadurch gekennzeichnet, dass die Durchlässe der Hohlwelle (2, 2a) versetzte rechteckige (6a) oder schraubenlinienförmige (6b) Durchbrechungen oder axial und in Umfangsrichtung gegeneinander versetzte Bohrungen (6) sind.

3. Kupplung nach einem der vorhergehenden Ansprüche, dadurch gekennzeichnet, dass die Durchlässe der Hohlwelle (2c) in radialer Richtung verlaufen (6), konisch sind (6c) oder in Umfangsrichtung gegen die radiale Richtung verkippt sind (6d).

4. Kupplung nach einem der vorhergehenden Ansprüche, dadurch gekennzeichnet, dass die Vorrichtung zur Freisetzung eines Reibmittels (10) aus einer das Reibmittel (10) enthaltenden Glasampulle (8) und einem in der Nähe angeordneten Sprengsatz (Auslösesquib 26) besteht.

5. Kupplung nach einem der Ansprüche 1 bis 3, dadurch gekennzeichnet, dass die Vorrichtung (28) zur Freisetzung eines Reibmittels (10) aus einem das Reibmittel (10) enthaltenden Röhrchen (28a), das an seiner Stirnseite oder an seiner Mantelfläche Öffnungen aufweist, und aus einem abziehbaren Deckel oder einer abziehbaren Hülse (28b) besteht.

6. Kupplung nach einem der Ansprüche 1 bis 3, dadurch gekennzeichnet, dass die Vorrichtung zur Freisetzung des Reibmittels aus einem keramischen Körper, der aus dem Reibmittel zusammengebacken ist, und einer Vorrichtung zu seiner Zerstörung besteht.

7. Kupplung nach einem der vorhergehenden Ansprüche, dadurch gekennzeichnet, dass als Reibmittel Siliziumcarbid, Aluminiumoxid, Sand, Metallspäne, Vanadiumspäne oder Industriestahlkorn je allein oder in Mischung vorgesehen sind.

8. Kupplung nach einem der vorhergehenden Ansprüche, dadurch gekennzeichnet, dass die Nabe (14) und die Hohlwelle (2) aus Stahl bestehen und die den Spalt bildenden Mantelflächen

durch an sich bekannten Verfahren wie Sandstrahlen angerauht sind.

9. Kupplung nach einem der vorhergehenden Ansprüche, dadurch gekennzeichnet, dass die Spaltbreite der mittleren Korngrösse der Reibmittel entspricht oder darunter liegt.

## Claims

1. One time clutch for the transmission of torque from a first, fast rotating shaft (2) to a hub (14) or to another second shaft, characterised in that the first shaft (2) is a hollow shaft (2) having several perforations (6) and that a device (8, 26, 28) is provided, which allows a release of a friction medium (10) in the interior of the hollow shaft (2), the friction medium (10) passing through said perforations (6) into the small gap between said hub (14) or that second shaft and said hollow shaft (2).

2. Clutch as in claim 1, said perforations of the hollow shaft (2, 2a) being staggered rectangular (6a) or helical section type (6b) or axial and tangential staggered bores (6).

3. Clutch as in one of the preceding claims, said bores (6, 6d) of the hollow shaft (2c) having an axis in a radial direction (6) or inclined to a radial direction (6d) or said bores (6c) being of conical configuration.

4. Clutch as in one of the preceding claims, wherein said device for releasing the friction medium (10) comprises a glass container (8) and a triggerable explosive charge (release squib 26).

5. Clutch as in one of the claims 1 to 3, wherein the device (28) for releasing the friction medium (10) comprises a small tube (28a) with perforations and a removable cap or a removable sleeve (28b), which closes the perforations.

6. Clutch as in one of the claims 1 to 3, wherein the device for releasing the friction medium comprises a ceramic carrier, caked together from the friction medium, and means for destroying it.

7. Clutch as in one of the preceding claims, wherein said friction medium is one or more of the followings: silicon carbide, aluminium oxide, sand, metal cutting, vanadium cutting or industry steel grain.

8. Clutch as in one of the preceding claims, wherein said shaft and said hub (14) or said second shaft (2) are made of steel and wherein the surfaces facing the gap between them are roughened i.e. by sandblasting.

9. Clutch as in one of the preceding claims, wherein said gap has a width equal or below the average grain size of the friction medium.

## Revendications

1. Dispositif d'accouplement irréversible pour la transmission d'un couple de rotation d'un arbre (2) tournant à grande vitesse à un moyeu (14) ou à un deuxième arbre, caractérisé en ce que l'arbre est conformé en arbre creux (2) dont l'enveloppe présente une pluralité de passages (6) et qu'il est équipé d'un dispositif (8, 26, 28) capable de libérer à l'intérieur de l'arbre creux (2) un produit de friction (10) qui pénètre dans la fente étroite prévue entre le moyeu (14) ou le deuxième arbre et l'arbre creux (2).

2. Dispositif d'accouplement selon la revendication 1, caractérisé en ce que les passages dans l'arbre creux (2, 2a) sont des découpes rectangulaires (6a) ou hélicoïdales (6b) décalées ou des trous (6) décalés les uns par rapport aux autres dans les directions axiale et circonférentielle.

3. Dispositif d'accouplement selon l'une des revendications 1 ou 2, caractérisé en ce que les passages dans l'arbre creux (2c) s'étendent dans le sens radial (6), sont coniques (6c) ou sont inclinés dans le sens circonférentiel (6d) par rapport à la direction radiale.

4. Dispositif d'accouplement selon l'une quelconque des revendications 1 à 3, caractérisé en ce que le dispositif pour la libération d'un produit de friction (10) se compose d'une ampoule de verre (8) contenant le produit de friction (10) et d'une charge explosive (amorce de déclenchement 26) disposée à proximité de celle-ci.

5. Dispositif d'accouplement selon l'une quelconque des revendications 1 à 3, caractérisé en ce que le dispositif (28) pour la libération d'un produit de friction (10) se compose d'un petit tube (28a) qui présente des orifices dans sa face frontale ou dans sa surface d'enveloppe, et d'un couvercle amovible ou d'une douille (28b) pouvant être retirée.

6. Dispositif d'accouplement selon l'une quelconque des revendications 1 à 3, caractérisé en ce que le dispositif pour la libération du produit de friction est constitué par un corps céramique en produit de friction aggloméré et par un dispositif assurant sa destruction.

7. Dispositif d'accouplement selon l'une quelconque des revendications 1 à 6, caractérisé en ce que du carbure de silicium, de l'oxyde d'aluminium, du sable, des copeaux métalliques, des copeaux de vanadium ou de la grenaille d'acier industrielle sont prévus comme produit de friction, à savoir respectivement seuls ou en mélange.

8. Dispositif d'accouplement selon l'une quelconque des revendications 1 à 7, caractérisé en ce que le moyeu (14) et l'arbre creux (2) sont réalisés en acier et que les surfaces d'enveloppe formant la fente sont rendues rugueuses par un procédé bien connu en soi tel que le sablage.

9. Dispositif d'accouplement selon l'une quelconque des revendications 1 à 8, caractérisé en ce que la largeur de la fente correspond à la grosseur moyenne des grains des produits de friction ou qu'elle est inférieure à celle-ci.

# Fig.1

Fig.2

2

6

6

2a

6a

6b

Fig.3

6d

2c

6

6c

Fig.4

28

28a

28b

7